# EUROPÄISCHE PATENTANMELDUNG

(11) **EP 1 323 681 A2**
(43) Veröffentlichungstag der Anmeldung: **02.07.2003**
(21) Anmeldenummer: 02025009.8
(22) Anmeldetag: 08.11.2002
(51) Int. Cl.: C03B 33/07, C03B 33/09

(54) **Verfahren und Vorrichtung zum Trennen von Verbundglas**

(30) Priorität: 24.12.2001 DE 10164070
(71) Anmelder: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Solf, Alexander, Dr.

(57) **Zusammenfassung**

Die Erfindung betrifft ein Verfahren zum Trennen von Verbundglastafeln, wobei eine Verbundglastafel entlang einer gewünschten Trennlinie geritzt wird und anschließend die Verbundglastafel entlang der Ritzlinie gebrochen wird und anschließend mit einer Heizvorrichtung über eine Wärme aussendende Einrichtung Folienmaterial im Bereich der Trennlinie der Verbundglastafel mit Wärme beaufschlagt wird, wobei eine Heizvorrichtung verwendet wird, die in Abhängigkeit von der Trennlinienlänge auf einer entsprechenden Heizlänge den Trennlinienbereich mit Wärme beaufschlagt, sowie Vorrichtungen zum Durchführen des Verfahrens.

## Beschreibung

Die Erfindung betrifft ein Verfahren zum Trennen von Verbundglas nach dem Oberbegriff des Anspruchs 1 und eine Vorrichtung zum Durchführen des Verfahrens nach dem Oberbegriff des Anspruchs 5.

Unter Verbundglas werden Glasscheiben verstanden, die aus mehreren Einzelscheiben zusammengesetzt sind, wobei die Einzelscheiben mit zwischen diesen liegenden Folien verklebt sind. Beispielsweise besitzt eine Verbundglasscheibe oder Verbundglasplatte eine erste äußere Glasscheibe oder Glasplatte, die außenseitig mit einer Wärmeschutzschicht versehen ist. Auf der Innenseite der Verbundglasscheibe ist eine zweite, insbesondere unbeschichtete Glasscheibe vorhanden, wobei die erste Scheibe und die zweite Scheibe mit einer Folie aufeinandergeklebt sind. Derartige Verbundglasplatten werden aus Glasrohplatten mit Dimensionen von 3 x 6 m oder größer gefertigt und müssen zur Herstellung von Glasscheiben bzw. Fenstern auf speziellen Verbundglasschneidanlagen in die entsprechenden gewünschten Formate geschnitten werden. Um derartige Verbundglasscheiben in die entsprechenden Formate zu trennen, werden sowohl die erste als auch die zweite Scheibe außenseitig angeritzt, eine Brechrolle oberseitig unter Druck entlang der Ritzlinie über die Scheibe gefahren, um die untere Scheibe zu brechen, und anschließend die obere Scheibe durch nach unten knicken gebrochen, so daß ein durchgehender Riß entsteht. Entlang der Rißlinie werden die Scheiben anschließend auseinandergezogen, wobei mit einer Heizeinrichtung die Folie aufgeheizt und anschließend mit einem Messer getrennt wird.

Derartige Heizeinrichtungen sind aufwendig gefertigte elektrische Heizeinrichtungen, die sich über die gesamte Breite des Bearbeitungstisches erstrecken. Die Heizeinrichtungen werden nach dem Ritzen und Knicken der Verbundglasscheibe aufgeheizt, bis sie eine für das Auseinanderziehen der Scheiben zum Trennen mit einem Messer erforderliche Temperatur erreicht haben.

Von Nachteil ist bei derartigen Heizeinrichtungen, daß sie auf das Größtformat ausgelegt sind, so daß bei kleineren Formaten Heizenergie verlorengeht, weil die gesamte Heizeinrichtung aufgeheizt werden muß, was einen hohen Zeitbedarf zur Folge hat. Der Zeitbedarf wird unter anderem dadurch verursacht, daß übliche Heizeinrichtungen aus in einer Quarzglasröhre angeordneten und nach außen abgeschlossenen Wendeln bestehen. Die Stromzufuhr erfolgt über Folienleiter, deren Maximalstrom begrenzt ist. Ferner ist von Nachteil, daß im Bereich der Kanten der Glasscheibe, die über die Glasscheibe überstehende Heizeinrichtung einen negativen Einfluß auf die Folie im Kantenbereich nimmt.

Aufgabe der Erfindung ist es, eine Vorrichtung zum Aufheizen von Folien in einer Verbundglasschneidanlage zu schaffen, welche effektiver und kostengünstiger arbeitet.

Die Aufgabe wird mit einem Verfahren mit den Merkmalen des Anspruchs 1 und einer Vorrichtung mit den Merkmalen des Anspruchs 5 oder 9 gelöst. Vorteilhafte Weiterbildungen sind in Unteransprüchen gekennzeichnet.

Erfindungsgemäß ist das Verfahren zum Trennen von Verbundglas derart ausgebildet, daß die Beheizung auf die Breite der Scheibe abgestimmt ist.

Erfindungsgemäß kann dies dadurch erfolgen, daß eine elektrische Heizeinrichtung über einen entlang der Heizeinrichtung verschiebbaren Stromabnehmer derart verfügt, daß die Beheizungslänge einfach, insbesondere über Sensoren, die die Scheibenbreite erfassen, gesteuert, automatisiert erfolgt. Im einfachsten Fall kann die Heizvorrichtung zumindest zwei unterschiedlich lange Beheizungseinrichtungen aufweisen, die beispielsweise auf zwei hauptsächlich auftretende Formate abgestimmt sind. Selbstverständlich kann auch eine Mehrzahl von Beheizungseinrichtungen vorgesehen sein, wobei sich beispielsweise zwei bezüglich der Scheibenbreite hintereinander angeordnete Beheizungseinrichtungen ergänzen können.

Bei einer derartigen Vorrichtung ist von Vorteil, daß bei kleineren Formaten nicht die gesamte Heizeinrichtung aufgeheizt werden muß, so daß der Aufheizvorgang schneller geht. In den Bereichen, in denen die Beheizungseinrichtung über die Scheibe übersteht, keine Energie vergeudet wird und die Folie im Kantenbereich nicht übermäßig thermisch strapaziert wird. Ferner können zwei getrennte, kürzere Einrichtungen schneller beheizt werden, da sie bei gleichem Maximalstrom der Zuleitung einen geringeren Widerstand besitzen.

Die Erfindung wird anhand einer Zeichnung beispielhaft erläutert. Es zeigen dabei:
- Fig. 1: eine Verbundglasschneidanlage in einem stark schematisierten Schnitt;

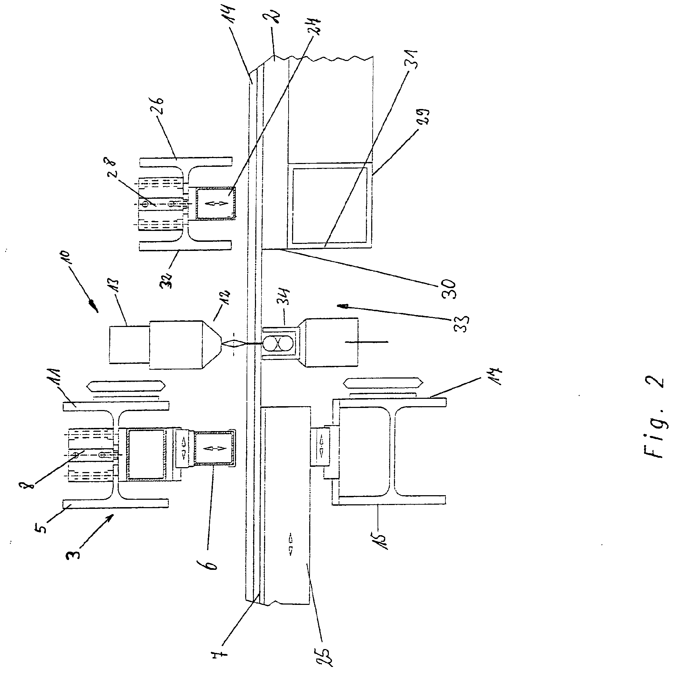

- Fig. 2: eine Anlage nach Fig. 1 mit einer unter der Scheibe angeordneten, insbesondere eingeschwenkten Beheizungseinrichtung;
- Fig. 3: eine Detailansicht einer erfindungsgemäßen Vorrichtung;
- Fig. 4: eine Ausführungsform einer erfindungsgemäßen Vorrichtung in einer schematisierten Draufsicht beim Beheizen einer Scheibe, die kleiner als das Größtformat ist;
- Fig. 5: eine Vorrichtung nach Fig. 4 beim Beheizen einer Glastafel maximaler Breite;
- Fig. 6: eine weitere Ausführungsform einer erfindungsgemäßen Vorrichtung mit parallel waagrecht nebeneinander angeordneten Beheizungseinrichtungen;

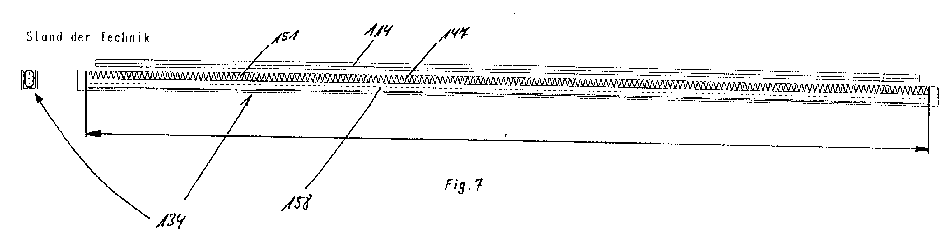

- Fig. 7: eine Vorrichtung nach dem Stand der Technik.

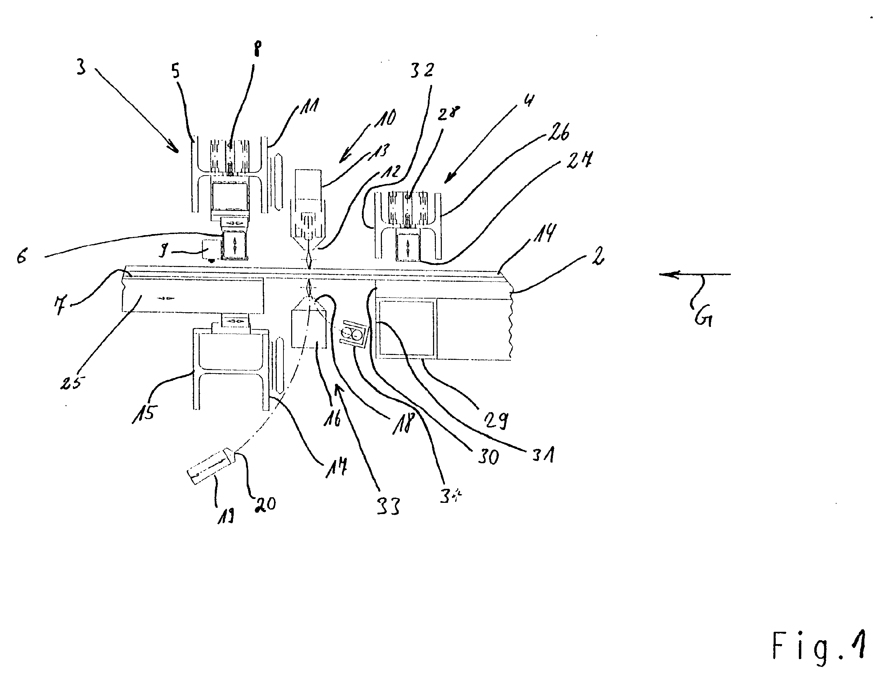

Eine Verbundglasschneidanlage 1 (Fig. 1) mit einer erfindungsgemäßen Heizvorrichtung 34 besitzt einen Bearbeitungstisch 2, eine Schneidbrücke 3 und einen Niederhalter 4.

Die Schneidbrücke 3 und der Niederhalter 4 überspannen den Bearbeitungstisch 2 quer zur Glasförderrichtung G und sind parallel und zueinander beabstandet angeordnet.

Die Schneidbrücke 3 wird aus einem Brückenträger 5 ausgebildet, welcher unterseitig einen oder mehrere Klemmbalken 6 besitzt. Der oder die Klemmbalken 6 sind vertikal verschieblich auf die Oberfläche 7 des Bearbeitungstisches 2 bewegbar, insbesondere absenkbar angeordnet. Zur absenkenden oder anhebenden Betätigung der oder des Klemmbalkens 6 sind am Brückenträger bzw. zwischen Brückenträger 5 und Klemmbalken 6 Kolbenzylindereinheiten 8 angeordnet. Die Kolbeinzylindereinheiten 8 sind beispielsweise über die Länge des Brückenträgers gleich verteilt angeordnet oder besitzen unterschiedliche Abstände zueinander. Die Größe und Anzahl der Zylinder ist von der gewünschten zu erzielenden Klemmkraft abhängig.

An den Kolbenzylindereinheiten 8 sind Sensoren 9 angeordnet, welche die Kolbenzylindereinheiten 8 aktivieren. Die Sensoren 9 sind Lichtsensoren, Tastsensoren oder andere bekannte Sensoren, welche feststellen können, ob sich im Meßfeld eine Glastafel befindet oder nicht.

Die Schneidbrücke 3 besitzt eine Schneid-/Brecheinrichtung 10, welche entlang der Längserstreckung der Schneidbrücke 3 an einer dem Niederhalter 4 zugewandten Längsseite 11 über die gesamte Breite des Bearbeitungstisches 2 verfahrbar ist. Die Schneid/Brecheinrichtung 10 besitzt einen auf eine Glastafel 14 absenkbaren Schneidkopf 12 zum oberseitigen Anritzen der Glastafel 14 sowie eine absenkbare Brechrolle 13. Unterseitig einer Ebene der Glastafel 14 des Bearbeitungstisches 2 ist ein zweiter Brückenträger 15 angeordnet, welcher mit dem ersten Brückenträger 5 fluchtet. Mit der Verfahrbahn des Schneidkopfes 12 fluchtend ist am zweiten Brückenträger 15 eine zweite untere Schneideinrichtung 16 angeordnet, welche entlang einer Längsseite 17 über die gesamte Breite des Bearbeitungstisches 2 verfahrbar ist. Die Schneideinrichtung 16 besitzt einen Schneidkopf 18. Ferner ist am zweiten, unteren Brückenträger 15 eine Brechleiste 19 vorhanden, welche absenkbar oder schwenkbar derart angeordnet ist, daß sie mit einer Brechkante 20 von unten an eine durch den Schneidkopf 18 bzw. Schneidkopf 12 erzeugte Ritzlinie einer Glastafel 14 auf diese Druck ausübend bewegbar ist.

An dem Brückenträger 15 ist zudem ein in Glasförderrichtung G, also quer zur Schneidrichtung, bewegliches bzw. verschiebliches Tischsegment 25 des Bearbeitungstisches 2 angeordnet, welches schnitt- bzw. schneidkopfseitig im Ruhezustand in etwa mit den Längsseiten 11, 17 abschließt und von diesen von den Schneideinrichtungen 10, 16 weg entlang der Glasebene bzw. entlang der Glasförderrichtung G verfahrbar ist.

Der Niederhalter 4 wird aus einem Niederhalterträger 26 und einem darunter zum Bearbeitungstisch 2 hin angeordneten Klemmbalken 27 ausgebildet. Der oder die Klemmbalken 27 sind vertikal verschieblich auf die Oberfläche 7 des Bearbeitungstisches 2 bewegbar. Zur Betätigung des oder der Klemmbalken 27 sind in gleicher Weise wie an der Schneidbrücke 3 Kolbenzylindereinheiten 28 angeordnet.

Unterhalb des Niederhalters 4 befindet sich der Bearbeitungstisch 2, wobei der Bearbeitungstisch 2 unterseitig einen Widerlagerträger 29 für den Niederhalter 4 besitzt. Der Bearbeitungstisch 2 weist eine Stirnfläche 30 auf, die zur Schneidbrücke 3 hinweist und bezüglich der Glasförderrichtung G quer verläuft sowie mit einer Längswandung 31 des Niederlagerträgers 29 und einer Längswandung 32 des Niederhalterträgers 26 fluchtet bzw. abfließt. Zwischen den Längswandungen 31, 32 sowie 11, 17 besteht ein Abstand 33 bzw. Freiraum 33 zum Einschwenken der Brechleiste 19 bzw. Verfahren des Schneidkopfes 18.

Am Bearbeitungstisch 2 bzw. am Widerlagerträger 29 ist ein in den Freiraum 33 schwenkbarer Heizstrahler 34 angeordnet, welcher sich über die gesamte Breite des Bearbeitungstisches erstreckt und derart angeordnet ist, daß er nach dem Schneiden durch die Schneidköpfe 12, 18 den angeritzten Bereich aufheizt.

Die erfindungsgemäße Heizvorrichtung 34 ist beispielsweise als Zwillingsrohrinfrarotstrahler 46 ausgebildet, wobei eine länglich rinnenförmige Halterung 40 vorhanden ist, welche im wesentlichen U-förmig mit einer Basiswandung 41 und zwei Seitenwandungen 42, 43 ausgebildet ist. Die Halterung 40 besitzt somit einen Innenraum 44 und eine zu einer Glastafel bzw. einer Ritzlinie in einer Glastafel 14 gerichtete Öffnung 45.

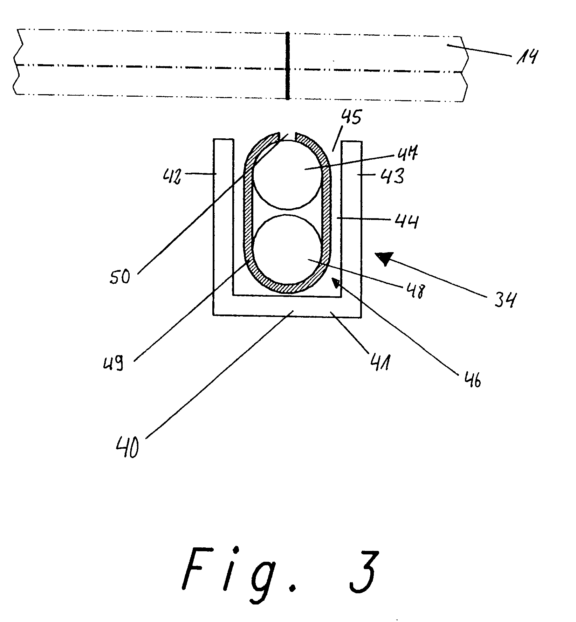

Bei einer ersten Ausführungsform (Fig. 3, 5, 6) ist in dem Hohlraum 44 der Zwillingsrohrinfrarotstrahler 46 mit einer oberen, im Bereich der Mündung 45 angeordneten Heizröhre 47 und einer unteren, im Bereich der Basiswandung 41 angeordneten Heizröhre 48 versehen. Die Heizröhren 47, 48 sind gering voneinander beabstandet, wobei um die Heizröhren 47, 48 herum ein Spezialgoldreflektor 49 angeordnet ist, welcher in etwa den Querschnitt einer aufrecht stehenden Null besitzt. Im Bereich des ersten Heizrohres 47 besitzt der Spezialgoldreflektor 49 einen Längsschlitz 50, der einer aufzuheizenden Scheibe 14 gegenüberliegt.

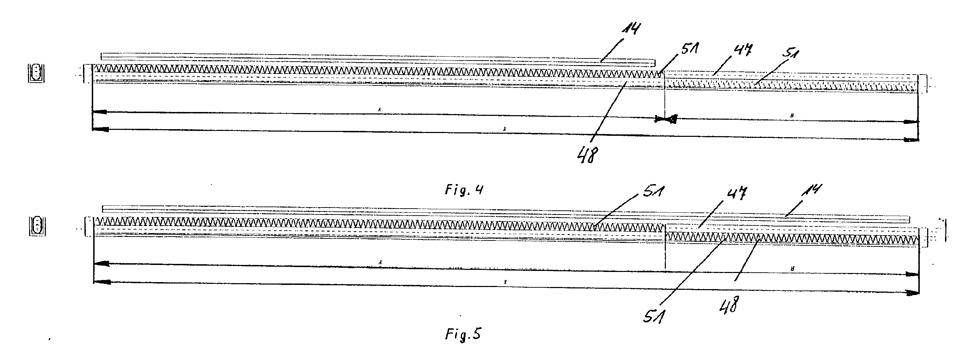

Die Heizrohre 47, 48 sind im Querschnitt runde Quarzglasröhren, in denen Heizwendeln (Fig. 4 bis 6) längsverlaufend angeordnet sind. Die Übereinanderanordnung von zwei Heizrohren 47, 48 erbringt zum einen eine höhere Wärmeausbeute, da beide Heizrohre beheizt werden, zum anderen wird die Stabilität der Beheizungseinrichtung bestehend aus den Heizrohren 47, 48 und dem Spezialgoldreflektor 49 hierdurch beträchtlich erhöht.

Die U-förmige Halterung 42 dient im wesentlichen der Abschirmung der Heizrohre 47, 48 nach außen, wobei über die Länge der Heizrohre 47, 48 die Halterung 40 bzw. Abschirmung 40 die Heizrohre beispielsweise mit Stegen (nicht gezeigt) teilbereichsweise abstützen kann.

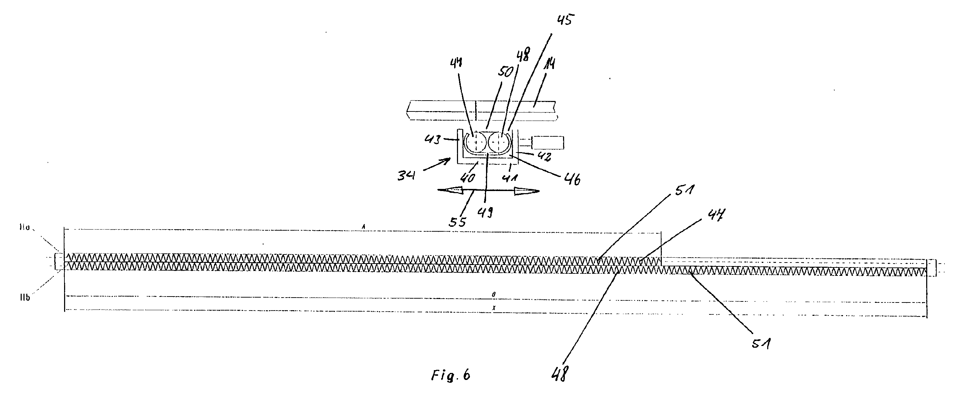

Bei einer ersten Ausführungsform der Erfindung in Verbindung mit übereinanderliegenden Heizrohren 47, 48 (Fig. 4, 5) sind die Heizrohre 47, 48 über die Gesamtlänge X asymmetrisch in einen größeren Teil A und einen kleineren Teil B geteilt, so daß wahlweise der größere Teil A beheizt wird oder zur Beheizung über die gesamte Breite des Tisches die Röhren im Bereich A und B beheizt werden. Bei einer Verbundglasplatte der Maximalbreite X werden somit beide Röhren auf der gesamten Länge beheizt (Fig. 5), wobei in Fig. 5 zur besseren Sichtbarkeit nicht in allen Röhren die Heizwendeln 51 eingezeichnet sind. Bei einer Scheibe 14, die nicht die Maximalbreite aufweist, sondern beispielsweise eine Breite A, die insbesondere einer Standardbreite entspricht, werden die Heizröhren 47, 48 nur mit ihrem längeren Teil auf einer Länge A geheizt, die der Breite einer kleineren Scheibe 14 entspricht. Die Länge A bzw. die Breite der Scheibe entspricht hierbei einer häufig verwendeten Standardbreite.

Bei einer weiteren vorteilhaften Ausführungsform sind die Röhren 47, 48 nicht starr in einen längeren Bereich A und einen kürzeren Bereich B unterteilt, sondern sind aus einer Vielzahl von kurzen Segmenten ausgebildet, die über die Länge der Röhre 47, 48 miteinander leitend verbunden sind. An einem Ende einer Röhre 47, 48 befindet sich eine Stromzuleitung (nicht gezeigt) und jedes der Segmente verfügt über eine Ableitung. Je nachdem welche Leitung mit dem Stromkreis verbunden wird, wird bis zum Segment dieser Ableitung geheizt. Hiermit ist eine Unterteilung der Heizlänge in kleinen Stufen möglich. Bei einer weiteren vorteilhaften Ausführungsform weist nicht jedes Segment eine einzelne Stromableitung auf, sondern einen Schleifkontakt, der über die Länge der Heizröhre 47, 48 verschiebbar ist, greift bei einer vorbestimmten Länge den Strom ab, so daß bis zu dem Abgriffspunkt geheizt wird. Bei einer weiteren vorteilhaften Ausführungsform wird die Heizwendel stufenlos mit einem Schleifkontakt abgegriffen, so daß nicht in Segmenten, sondern über eine stufenlose Länge abgegriffen und damit auch geheizt werden kann.

Von besonderem Vorteil ist, wenn bei den vorgenannten gestuften oder stufenlosen Heizverfahren die Breite der Scheibe mittels Sensoren automatisch erkannt wird und der Strom von der Heizröhre entsprechend abgegriffen wird und somit jederzeit die richtige Heizlänge der Heizröhre eingestellt ist.

Bei einer weiteren Ausführungsform (Fig. 6) sind die Röhren 47, 48 parallel zu einer Glasscheibe 14 nebeneinander liegend angeordnet, so daß der Schlitz 50 des Reflektors 49 eine Breite aufweisen muß, die wenig unter der Breite der nebeneinander liegenden Röhren 47, 48 liegt. Bei einer derartigen Ausführungsform ist eine Röhre 47 mit einer Heizwendel 51 ausgebildet, welche sich lediglich über die Länge A erstreckt, wobei die Länge A der Breite einer schmaleren Scheibe 14 entspricht. Die zweite Röhre 48 weist eine Heizwendel auf, die die gesamte Länge der Heizröhre einnimmt. Um unter dem Schlitz der Scheibe 14, je nach Breite der Scheibe, mit einer entsprechend langen Heizwendel zu heizen, ist die Heizeinrichtung 34 entsprechend dem Pfeil 5 derart verschieblich angeordnet, daß entweder die Röhre 47 mit der kurzen Heizwendel 51 oder die Röhre 48 mit der langen Heizwendel 51 unter dem Schnittbereich der Scheibe 14 angeordnet ist.

Bei den erfindungsgemäßen Heizröhren, die auch lediglich nur über Teillängen betreibbar bzw. beheizbar sind, ist von Vorteil, daß bei Schnittlängen, die kleiner als das Maximalmaß sind, eine höhere Wirtschaftlichkeit vorhanden ist. Ein zusätzlicher Vorteil ist die kürzere Ausfallszeit, da die Heizröhre nicht komplett genutzt wird. Durch die kürzere Nutzung der Heizröhre oder der Heizröhren erzielt man eine größere Leistung pro Centimeter. Dieses ist dadurch bedingt, daß das benutzte Strahlersystem baulichen Beschränkungen bezüglich der maximalen Stromstärke und Spannung unterliegt. Pro Röhre ist eine maximale Leistung von ca. 9 kW möglich. Bei Schnitten, die der maximalen Länge entsprechen, kann die obere Heizröhre beispielsweise auf ganzer Länge oder nur auf einer Teillänge und die untere Heizröhre auf der gesamten Länge aufgeheizt werden. Die Abmessungen der Zwillingsrohrinfrarotstrahler sowie die Teilung der Röhren richtet sich am Bedarf der Gesamtschnittlängen aus, wobei auch stufige oder stufenlose Heizröhren von Vorteil sind. In einer einfachsten Ausführungsform weist die obere Röhre nur die Länge eines kleineren Scheibenstandardbreitenmaßes auf, während die untere Röhre eine Länge aufweist, die der Maximalbreite einer möglichen Scheibe entspricht. In diesem Fall wird bei einer Scheibe mit einer geringen Breite nur mit der oberen Röhre geheizt. Die fehlende Hitze der unteren Röhre wird bei der oberen Röhre dadurch ausgeglichen, daß sie aufgrund der geringeren Länge bei gleicher Energiezufuhr heißer wird. Bei Scheiben, die die Maximallänge besitzen, wird dann mit beiden Heizröhren geheizt.

## Patentansprüche

1. Verfahren zum Trennen von Verbundglastafeln, wobei eine Verbundglastafel entlang einer gewünschten Trennlinie geritzt wird und anschließend die Verbundglastafel entlang der Ritzlinie gebrochen wird und anschließend mit einer Heizvorrichtung (35) über eine Wärme aussendende Einrichtung (46) Folienmaterial im Bereich der Trennlinie der Verbundglastafel mit Wärme beaufschlagt wird,
**dadurch gekennzeichnet,daß**
eine Heizvorrichtung verwendet wird, die in Abhängigkeit von der Trennlinienlänge auf einer entsprechenden Heizlänge den Trennlinienbereich mit Wärme beaufschlagt.

2. Verfahren nach Anspruch 1,
**dadurch gekennzeichnet, daß**
auf einer etwas kürzeren Länge als der Trennlinienlänge geheizt wird.

3. Verfahren nach Anspruch 1,
**dadurch gekennzeichnet, daß**
auf einer etwas längeren Länge als der Trennlinienlänge geheizt wird.

4. Verfahren nach einem der vorhergehenden Ansprüche,
**dadurch gekennzeichnet, daß**
mindestens zwei in Trennlinienrichtung hintereinander angeordnete Heizeinrichtungen verwendet werden.

5. Vorrichtung zum Trennen von Verbundglastafeln mit einer Heizvorrichtung (35), welche über eine Wärme aussendende Einrichtung (46) Folienmaterial im Bereich einer Trennlinie einer Verbundglasscheibe oder -tafel mit Wärme beaufschlagt, insbesondere zum Durchführen des Verfahrens nach Anspruch 1,
**dadurch gekennzeichnet,daß**
die Hitze aussendende Einrichtung (46) zum teilbereichsweisen Aufheizen von unterschiedlich breiten Glasplatten eine Mehrzahl von unterschiedlich langen Heizstrahlern (47, 48) oder Heizsegmenten aufweist.

6. Vorrichtung nach Anspruch 5,
**dadurch gekennzeichnet, daß**
die Hitze aussendende Einrichtung (46) zum teilbereichsweisen Aufheizen zwei unterschiedlich lange Heizstrahler (47, 48) besitzt, die abhängig von der Breite der Scheibe betätigbar sind.

7. Vorrichtung nach Anspruch 5,
**dadurch gekennzeichnet, daß**
daß die unterschiedlich langen Heizstrahler trommelartig angeordnet sind, wobei der jeweils benötigte Heizstrahler revolverartig unter die Scheibe der entsprechenden Breite drehbar oder schwenkbar angeordnet und anschließend heizend betätigbar ist.

8. Vorrichtung nach Anspruch 5,
**dadurch gekennzeichnet, daß**
zumindest ein Heizstrahler in eine Mehrzahl von Heizsegmenten unterteilt ist, wobei der Heizstrahler mit elektrischem Strom beaufschlagt Hitze aussendet, wobei zumindest an einem Ende des Heizstrahlers eine Stromzuleitung bzw. Stromableitung vorhanden ist und ein Stromzuleitungs- oder Stromableitungsmittel vorhanden ist, welches auf den Segmenten frei verschieblich angeordnet ist, so daß durch die Verschiebung des Mittels unterschiedlich lange, mit Strom beaufschlagte Bereiche des Heizstrahlers gebildet werden.

9. Vorrichtung zum Trennen von Verbundglastafeln mit einer Heizvorrichtung (35), welche über eine Wärme aussendende Einrichtung (46) Folienmaterial im Bereich einer Trennlinie einer Verbundglasscheibe oder -tafel mit Wärme beaufschlagt, insbesondere zum Durchführen des Verfahrens nach Anspruch 1,
**dadurch gekennzeichnet, daß**
die Hitze aussendende Einrichtung (46) eine mit elektrischem Strom beaufschlagte Heizdrahtspule ist, wobei die Heizdrahtspule an einem Ende Mittel zum Beaufschlagen derselben mit elektrischem Strom aufweist und ferner ein Schleifring leitend auf der Spule verschieblich angeordnet ist, so daß über den Abstand der ersten Strom beaufschlagenden Einrichtung zum Schleifring ein Strom durch die Spule fließt und diese aufheizt.

10. Vorrichtung nach Anspruch 6,
**dadurch gekennzeichnet, daß**
die Hitze aussendende Einrichtung (46) ein Zwillingsrohrinfrarotstrahler (46) ist, wobei eine länglich rinnenförmige Halterung (40) vorhanden ist, welche im wesentlichen U-förmig mit einer Basiswandung (41) und zwei Seitenwandungen (42, 43) ausgebildet ist, wodurch die Halterung (40) einen Innenraum (44) und eine zu einer Glastafel bzw. einer Ritzlinie in einer Glastafel (14) gerichtete Öffnung (45) ausbildet.

11. Vorrichtung nach Anspruch 10,
**dadurch gekennzeichnet, daß**
in dem Hohlraum (44) der Zwillingsrohrinfrarotstrahler (46) mit einer oberen, im Bereich der Mündung oder Öffnung (45) angeordneten Heizröhre (47) und einer unteren, im Bereich der Basiswandung (41) angeordneten Heizröhre (48) ausgebildet ist.

12. Vorrichtung nach Anspruch 9 oder 10,
**dadurch gekennzeichnet,daß**
die Heizröhren (47, 48) gering voneinander beabstandet sind, wobei um die Heizröhren (47, 48) herum ein Spezialgoldreflektor (49) ausgebildet ist, welcher in etwa den Querschnitt einer aufrecht stehenden Null aufweist.

13. Vorrichtung nach einem der Ansprüche 10 bis 12,
**dadurch gekennzeichnet,daß**
im Bereich des ersten Heizrohres (47) der Spezialgoldreflektor einen Längsschlitz (50) aufweist, der einer aufzuheizenden Scheibe (14) gegenüberliegt.

14. Vorrichtung nach einem der Ansprüche 10 bis 13,
**dadurch gekennzeichnet, daß**
die Heizrohre (47, 48) im Querschnitt runde Quarzglasröhren sind, in denen Heizwendeln längsverlaufend angeordnet sind.

15. Vorrichtung nach einem der Ansprüche 6 bis 13,
**dadurch gekennzeichnet, daß**
über die Länge der Heizrohre (47, 48) die Halterung (40) bzw. Abschirmung (40) die Heizrohre (47, 48) beispielsweise mit Stegen teilbereichsweise abstützt.

16. Vorrichtung nach einem der Ansprüche 10 bis 15,
**dadurch gekennzeichnet, daß**
die Heizrohre (47, 48) über die Gesamtlänge asymmetrisch in einen größeren Teil und einen kleineren Teil geteilt sind, so daß wahlweise der größere Teil beheizt wird oder zur Beheizung über die gesamte Breite des Tisches die Röhren im breiten und im schmalen Bereich gleichzeitig beheizt werden.

17. Vorrichtung nach Anspruch 8,
**dadurch gekennzeichnet, daß**
die Segmente über die Länge der Röhren (47, 48) miteinander leitend verbunden sind, wobei an einem Ende einer Röhre (47, 48) eine Stromzuleitung vorhanden ist und jedes der Segmente über eine eigene Stromableitung verfügt, wobei, je nachdem, welche Leitung mit dem Stromkreis verbunden wird, bis zu diesem Segment dieser Leitung die Heizröhre mit Strom beaufschlagbar ist.

18. Vorrichtung nach Anspruch 6 sowie Ansprüchen 12 bis 16,
**dadurch gekennzeichnet, daß**
die Röhren (47, 48) parallel zu einer Glasscheibe (14) nebeneinander liegend angeordnet sind, so daß der Schlitz (50) des Reflektors (49) eine Breite aufweist, die gering unter der Breite der nebeneinander liegenden Röhren (47, 48) liegt.

19. Vorrichtung nach Anspruch 18,
**dadurch gekennzeichnet, daß**
eine Röhre (47) mit einer Heizwendel (51) ausgebildet ist, welche sich über eine vorgegebene erste Länge (a) erstreckt, wobei die Länge (a) der Breite einer schmaleren Scheibe (14) entspricht und die zweite Röhre (48) eine Heizwendel aufweist, die die gesamte Länge der Heizröhre einnimmt.

20. Vorrichtung nach einem der Ansprüche 18 oder 19,
**dadurch gekennzeichnet, daß**
die Heizeinrichtung (34) parallel zur Scheibe (40) derart verschieblich angeordnet ist, daß entweder eine Röhre (47) mit der kurzen Heizwendel oder eine andere Röhre (48) mit der langen Heizwendel unter dem Schnittbereich der Scheibe (14) angeordnet ist.
